# EUROPÄISCHE PATENTANMELDUNG

(11) **EP 1 892 091 A1**
(43) Veröffentlichungstag der Anmeldung: **27.02.2008**
(21) Anmeldenummer: 06017832.4
(22) Anmeldetag: 25.08.2006
(51) Int. Cl.: B32B 15/01, B23K 35/00, C23C 30/00, F01D 5/28

(54) **Turbinenschaufel mit Schutzschicht und Pufferlage**

(71) Anmelder: SIEMENS AKTIENGESELLSCHAFT, 80333 München (DE)
(72) Erfinder: David, Walter, 45481 Mülheim an der Ruhr (DE); Hermann, Olaf, 45479 Mülheim (DE)

(57) **Zusammenfassung**

Die Erfindung betrifft eine Strömungsmaschine, die Leitschaufeln und Laufschaufeln aufweist. Zumindest die Laufschaufeln weisen zumindest bereichsweise eine Schutzschicht auf. Zwischen der Schutzschicht und der Laufschaufel bzw. dem Laufschaufelgrundwerkstoff ist eine Pufferlage angeordnet.

## Beschreibung

Die Erfindung betrifft eine Strömungsmaschine, die Leitschaufeln und Laufschaufeln aufweist, wobei zumindest die Laufschaufeln zumindest bereichsweise eine Schutzschicht aufweisen.

Derartige Strömungsmaschinen sind z.B. als Verdichter, Dampfturbine oder Gasturbine bekannt. Die Strömungsmaschine weist einen um eine Rotationsachse drehbar gelagerten Rotor auf, an dem die Laufschaufeln verankert sind. Ein stationäres Bauteil ist derart angeordnet, dass ein Radialspalt zwischen der Laufschaufelspitze und dem stationären Bauteil entsteht. Das stationäre Bauteil kann beispielsweise als Innengehäuse ausgestaltet sein. Dem Innengehäuse ist die Leitschaufel zugeordnet, so dass das Innengehäuse als Leitschaufelträger ausgestaltet ist.

In der Strömungsmaschine strömt ein Strömungsmedium im Wesentlichen entlang der Rotationsachse an der Laufschaufel vorbei, wobei das Strömungsmedium seinem vorgegebenen Weg durch das durch die hintereinander angeordneten Laufschaufeln und Leitschaufeln gebildete Schaufelgitter folgt.

Insbesondere bei Dampfturbinen wird beobachtet, dass sich im Mediumstrom bzw. Dampfstrom Nebeltröpfchen bilden, die von den Leitschaufeln eingefangen werden, dort akkumulieren und von den Austrittskanten als Wassertropfen abreissen. Diese Wassertropfen führen aufgrund ihrer hohen kinetischen Energie an den Laufschaufeln, insbesondere an den Laufschaufeleintrittskanten zu Oberflächenzerrüttung und Tropfenschlagerosion, so dass zum Teil kostenintensive Kantenschutzmaßnahmen getroffen werden müssen.

Insbesondere Niederdruckdampfturbinenschaufeln (ND Schaufeln), insbesondere der letzten Stufe unterliegen besonderer Beanspruchung durch in dem an dieser Stelle nassen Dampf befindlichen Tropfen, welche mit hoher Geschwindigkeit auf die Eintrittskante der ND Schaufel und angrenzende Bereiche schlagen. Diese Beanspruchung ist bekannt als Tropfenschlag und der dazugehörige Verschleißmechanismus als Tropfenschlagerosion. Durch fortschreitende Tropfenschlagerosion wird die Funktion der ND Schaufeln vermindert, was den Wirkungsgrad erheblich beeinträchtigt.

Um die negativen Auswirkungen der Tropfenschlagerosion zu vermeiden ist es beispielsweise bekannt, die Laufschaufeln, insbesondere die Laufschaufeleintrittskanten vor der Tropfenschlagerosion zu schützen.
Bekannte Verfahren zum Schutz der Eintrittskanten von ND Schaufeln sind beispielsweise
Härten (z.B. Flammhärten, induktives Härten oder Härten mittels Laserstrahlbearbeitung),
Anlöten von Kanten aus Hartstofflegierungen,
Anschweißen von Kanten aus Hartstofflegierungen, und/oder
Auftragsschweißen, Schweißplattieren von Hartstoffschichten direkt auf den Schaufelgrundwerkstoff.

Bei dem Härten wird festgestellt, dass eine gehärtete Eintrittskante gängigen Hartstoffschichten wie beispielsweise Stellit 6 unterlegen ist, wobei die hervorgerufenen Eigenspannungen bei dem Härten eine Verwendung derartiger Schutzschichten unter bestimmten Betriebsvoraussetzungen verbieten kann. Angelötete Kanten aus Hartstoffschichten dagegen sind aufgrund der im Vergleich zur Schweißung geringeren Festigkeit der Verbindung anfällig gegen ein Abplatzen. Bei Kanten aus Hartstofflegierungen ist zu beobachten, dass diese lediglich an Schaufeln mit geringer Baulänge angeschweißt werden. Bekannt ist auch, dass Auftragsschweißungen von Kobalt Basis Hartstofflegierungen durchgeführt werden.

Der Erfindung liegt die Aufgabe zugrunde, eine Strömungsmaschine der Eingangs genannten Art mit einfachen Mitteln dahingehend zu verbessern, dass insbesondere die Dauerfestigkeitseigenschaften zumindest der Laufschaufeln nicht ungünstig beeinflusst werden, wobei die Laufschaufeln wesentlich resistenter gegen Tropfenschlagerosion ausgeführt sein sollen.

Erfindungsgemäß wird die Aufgabe gelöst durch eine Pufferlage, die zwischen der Schutzschicht und der Laufschaufel bzw. dem Laufschaufelgrundwerkstoff angeordnet ist.

Günstig im Sinne der Erfindung ist, wenn die Schutzschicht eine Hartstoffschicht ist, die, bezogen auf den Laufschaufelgrundwerkstoff, über der Pufferlage angeordnet ist.

Zweckmäßigerweise ist die Schutzschicht und die Pufferlage als Auftragsschweißung aufgebracht, wobei die Pufferlage direkt auf den Schaufelgrundwerkstoff aufgetragen wird und nachfolgend die Schutzschicht auf die Pufferlage aufgebracht wird.

Günstig im Sinne der Erfindung ist, wenn die Pufferlage aus einem Nickelbasiswerkstoff besteht, wobei die Pufferlage bevorzugterweise in einem Laserschweißprozess aufgetragen wird.

Vorteilhafterweise kann die Schutzschicht gegen Tropfenschlagerosion bevorzugt durch Auftragsschweißen einer Hartstoffschicht mit darunter liegender Pufferlage aus dem Nickelbasiswerkstoff bzw. Nickelbasisschweißgut hergestellt werden. Durch die erfindungsgemäße Anordnung der Pufferlage zwischen dem Laufschaufelgrundwerkstoff und der Hartstoffschicht können die Dauerfestigkeitseigenschaften gegenüber einer direkt auf den Schaufelgrundwerkstoff aufgetragenen Hartstoffschicht verbessert werden. Zudem kann durch die Pufferlage ein wesentlich günstigerer Eigenspannungszustand sowohl in der Schutzschicht als auch im Übergangsbereich zum Schaufelgrundwerkstoff erzeugt werden, wodurch die Dauerfestigkeit und die Korngrenzen im Vergleich zu der direkt auf dem Schaufelgrundwerkstoff aufgetragenen Hartstoffschicht positiv beeinflusst werden können.

Günstig im Sinne der Erfindung ist, wenn die Schutzschicht und die, bezogen auf den Laufschaufelgrundwerkstoff, darunter angeordnete Pufferlage an den Laufschaufeleintrittskanten und eventuell an daran angrenzenden Bereichen der Laufschaufel angeordnet ist. Möglich ist natürlich auch, andere Bereiche bzw. Oberflächenbereiche wie z.B. Schaufelfuß, Stützflügel und/oder Deckplatten und/oder die gesamte Laufschaufel erfindungsgemäß mit einer Pufferlage und darüber angeordneter Schutzschicht zu versehen. Natürlich können auch Leitschaufeln entsprechend mit der Pufferlage und der Schutzschicht versehen sein.

Selbstverständlich ist die Erfindung nicht auf auf eine Anwendung bei der beispielhaft genannten Tropfenschlagerosion als Verschleißmechanimus bzw. Oberflächenzerrüttung beschränkt, sondern kann natürlich auch an Bauteilen eingesetzt werden, bei denen andere mechanische Beschädigungen (Verschleißmechanismen) jeglicher Art zu erwarten sind.

## Patentansprüche

1. Strömungsmaschine, die Leitschaufeln und Laufschaufeln aufweist, wobei zumindest die Laufschaufeln zumindest bereichsweise eine Schutzschicht aufweisen, **gekennzeichnet durch**, eine Pufferlage, die zwischen der Schutzschicht und der Laufschaufel angeordnet ist.

2. Strömungsmaschine nach Anspruch 1,
**dadurch gekennzeichnet, dass** die Schutzschicht eine Hartstoffschicht ist, die, bezogen auf den Laufschaufelgrundwerkstoff, über der Pufferlage angeordnet ist.

3. Strömungsmaschine nach Anspruch 1 oder 2,
**dadurch gekennzeichnet , dass** die Schutzschicht und die Pufferlage als Auftragsschweißung aufgebracht sind.

4. Strömungsmaschine nach einem der vorhergehenden Ansprüche,
**dadurch gekennzeichnet , dass** die Pufferlage aus einem Nickelbasiswerkstoff besteht.

5. Strömungsmaschine nach einem der vorhergehenden Ansprüche,
**dadurch gekennzeichnet , dass** zumindest die Pufferlage in einem Laserschweißprozess aufgetragen wird.
